# EUROPÄISCHE PATENTSCHRIFT

(11) **EP 3 144 117 B1**
(45) Veröffentlichungstag und Bekanntmachung des Hinweises auf die Patenterteilung: **03.11.2021**
(21) Anmeldenummer: 16182700.1
(22) Anmeldetag: 04.08.2016
(51) Int. Cl.: B29C 39/00

(54) **GIESSFORMKÖRPER**
CAST MOULD BODY
CORPS DE MOULE

(30) Priorität: 18.09.2015 DE 102015115769
(43) Veröffentlichungstag der Anmeldung: 22.03.2017
(73) Patentinhaber: Schock GmbH, 94209 Regen (DE)
(72) Erfinder: PATERNOSTER, Rudolf, 94269 Rinchnach (DE); PLEDL, Xaver, 94227 Zwiesel (DE)
(74) Vertreter: Lindner Blaumeier Patent- und Rechtsanwälte

(56) Entgegenhaltungen:
- EP-A1- 0 361 101
- DE-C2- 4 313 924
- DE-T2- 3 853 920
- US-A- 4 107 135
- US-A1- 2011 288 194
- Parvin Shokri ET AL: "Effect of the Post-Filling Stage on Fiber Orientation at the Mid-Plane in Injection Molding of Reinforced Thermoplastics", Physics Procedia, 1 January 2012 (2012-01-01), pages 79-85, XP055673172, DOI: 10.1016/j.phpro.2012.03.053 Retrieved from the Internet: URL:http://www.escm.eu.org/docs/eccm13/261 3.pdf
- David A. Biro ET AL: "Application of the microbond technique. IV. Improved fiber-matrix adhesion by RF plasma treatment of organic fibers", Journal of Applied Polymer Science, vol. 47, no. 5, 5 February 1993 (1993-02-05), pages 883-894, XP055722165, US ISSN: 0021-8995, DOI: 10.1002/app.1993.070470516

## Beschreibung

Die Erfindung betrifft einen Gießformkörper aus einem Kompositwerkstoff mit einem ausgehärteten polymeren Bindemittel und darin eingelagerten Füllstoffpartikeln.

Solche Gießformkörper sind beispielsweise in Form von Küchenspülbecken, Waschbecken, Arbeitsplatten oder Duschtassen bekannt. Sie werden in einem Gießverfahren hergestellt, wie beispielsweise in EP 0 361 101 A1 beschrieben ist. Neben einer hohen optischen Qualität weisen sie auch sehr gute Gebrauchseigenschaften auf, insbesondere was die Abriebfestigkeit und Kratzfestigkeit angeht. Aus der US4107135 ist ein Gießformkörper bekannt, der Polyamidfasern umfasst, die laut Anspruch 11 einen Massenanteil von 0,05 bis 1 Prozent, eine Länge zwischen 0,254mm und 12,7mm und einen Durchmesser zwischen ungefähr 0,011 mm und 0,2mm aufweisen. In den in dieser Druckschrift offenbarten Ausführungsbeispielen beträgt der Massenanteil teilweise 0,2 Prozent. Die Faserlänge in den Ausführungsbeispielen ist jedoch stets unter 3mm und der Faserdurchmesser unter 0,082mm. Als Zielsetzung strebt das Dokument an, mittels der Fasern eine in der Oberfläche sichtbaren Sprenkeleffekt zu erzielen.

Ein solches Gießformteil, beispielsweise in Form einer Küchenspüle, weist üblicherweise eine Rückseite und eine Sichtseite auf, es handelt sich um ein relativ großflächiges Bauteil. Es weist üblicherweise einen relativ hohen Gehalt an Füllstoffpartikeln auf, die in der polymeren Bindemittelmatrix eingelagert sind. Dies verleiht dem Material eine gewisse Sprödigkeit, insbesondere wenn das Bindemittel einen hohen Vernetzeranteil aufweist, wie z.B. in DE 10 2004 055 365 A1 bekannt. Da ein solcher Formkörper im üblichen Betrieb durchaus mechanischen oder thermischen Belastungen ausgesetzt sein kann, kann es im Extremfall aufgrund der Sprödigkeit des Materials und damit der reduzierten Schlagzähigkeit zu einer Rissbildung kommen, das heißt, dass eine gewisse Rissanfälligkeit gegeben ist, wenn es zu einer starken Beanspruchung des Gießformkörpers insbesondere an der Sichtseitenoberfläche kommt. Eine solche starke Beanspruchung kann beispielsweise bei Aufstellen eines sehr heißen Topfes auf die kalte Oberfläche und damit induzierten thermischen Spannungen oder bei einer Schlagbeanspruchung durch einen herunterfallenden Gegenstand oder dergleichen kommen.

Der Erfindung liegt damit das Problem zugrunde, einen Gießformkörper mit einer verbesserten Widerstandsfähigkeit gegen Rissbildung anzugeben.

Zur Lösung dieses Problems ist bei einem Gießformkörper der eingangs genannten Art erfindungsgemäß vorgesehen, der die Merkmale des Anspruchs 1 aufweist.

Die Erfindung schlägt die Integration von Polyamidfasern in die Bindemittelmatrix vor, um dem Gießformkörper eine erhöhte Schlagzähigkeit und damit eine verbesserte Widerstandsfähigkeit gegen Rissanfälligkeit zu verleihen. Ein typischer, technischer Kennwert für diese Widerstandsfähigkeit ist die sogenannte Schlagzähigkeit nach DIN 53448. Maßgeblich ist hierbei, dass die für den entsprechenden Gießkörper nötige Gießmasse die jeweilige notwendige Prozessfähigkeit, das heißt Gieß- bzw Fließfähigkeit beibehält. Zu diesem Zweck sind bei einem erfindungsgemäßen Gießformkörper in der Bindemittelmatrix regellos verteilte Polyamidfasern eingebracht. Der Gießformkörper weist eine lokal gegebenenfalls unterschiedliche Dicke oder Stärke auf, wobei die Polyamidfasern in dem Körper regellos, jedoch bevorzugt weitgehend homogen verteilt sind. Erfindungsgemäß weisen die Fasern dabei eine Grundausrichtung parallel zu einer Sichtseite des Gießformkörpers auf. Unter einer solchen "Gundausrichtung" ist erfindungsgemäß zu verstehen, dass die länglichen Fasern so in die Bindemittelmatrix eingebunden sind, dass sie im Wesentlichen parallel zur Sichtseite verlaufen, wobei hierunter natürlich nicht eine absolute Parallelität zu verstehen ist, sondern auch eine leicht gewinkelte Ausrichtung zur Sichtflächenebene, das heißt, dass sie auch unter einem flachen Winkel zur Sichtflächenebene orientiert sein können. Sie verlaufen nicht unter einem größeren Winkel zur Sichtflächenebene, wobei hierunter bereits ein Winkel ≥ 15° zu verstehen ist. In keinem Fall stehen die Fasern relativ steil oder gar weitgehend senkrecht zur Sichtflächenebene. Dies führt dazu, dass die Bindemittelmatrix mit einer Faserverstärkung versehen ist, die weitgehend homogen, jedoch in näherungsweise paralleler Ausrichtung und Verteilung bezogen auf das großflächige, jedoch von der Dicke oder Stärke her relativ dünne Bauteil gegeben ist.

Als Faser werden Polyamidfasern verwendet, die sich insbesondere durch eine hinreichende Festigkeit und Steifigkeit auszeichnen. Bevorzugt, aber nicht notwendigerweise haben die zu verwendenden Polyamidfasern eine Reißfestigkeit von wenigstens 250 N/mm², was in Verbindung mit ihrer festen Einbindung in die Bindemittelmatrix und ihrer vorstehend beschriebenen Grundausrichtung für eine hohe Schlagzähigkeit sorgt.

Die Fasergeometrie ist zur Erzielung guter Ergebnisse hinreichend definiert. Die Fasern weisen eine Länge von 8 - 12 mm und einen Durchmesser von 0,1 - 0,15 mm auf. Es hat sich herausgestellt, dass Fasern mit diesen Abmessungen einerseits gut in die Bindemittelmatrix einbindbar sind, und andererseits aufgrund ihrer regellosen, jedoch von der Grundausrichtung her einigermaßen gerichteten Verteilung für eine gute und definierte Matrixdurchsetzung sorgen. Kürzere Fasern können nicht hinreichend in die Bindemittelmatrix eingebunden werden, zu lange Fasern können zu einer Knäuelbildung führen. Sind die Fasern vom Durchmesser her kleiner als der angegebene untere Grenzwert, so ergeben sich Probleme in der Prozessfähigkeit, das heißt eine zu hohe Viskosität, wenn für eine ausreichende Erhöhung der Schlagzähigkeit die notwendige Einsatzmenge eingesetzt wird. Sind die Fasern vom Durchmesser her größer als der angegebene obere Grenzwert, so benötigt man für eine ausreichende Haftung in der Bindemittelmatrix überproportional längere Faser bei gleicher Einsatzmenge, wodurch sich wiederum die Prozessfähigkeit einschränkt aufgrund der schlechteren Verarbeitbarkeit der Gießmasse wegen z. B. Knäuelbildung. Mit abnehmender Querschnittsfläche der Faser nimmt die Oberfläche der Faser bei gleichbleibender Faserlänge überproportional zu, und umgekehrt.

Der Anteil der Fasern, bezogen auf die Gesamtmasse des Formkörpers liegt im Bereich zwischen 0,05 - 0,2 Gew.%. Ein Zuschlag von zu wenig Fasern führt zu keiner nennenswerten Eigenschaftsverbesserung, insbesondere, wenn relativ kurze Fasern verwendet werden, während eine Zugabe von zu viel Fasern nachteilig im Hinblick auf die rheologischen Eigenschaften der Gießmasse, die dadurch zu hochviskos und nicht mehr in geeignetem Umfang prozessfähig ist, insbesondere wenn längere und vom Durchmesser her dünne Fasern verwendet werden. Es kann bei zu hohem Faseranteil ferner zu verstärkten Gefügestörungen kommen.

Werden Polyamidfasern mit den entsprechenden geometrischen sowie mechanischen Eigenschaften in dem angegebenen Mengenbereich eingebracht, wobei die Wahl der zugegebenen Fasern und Fasermenge in Abhängigkeit der Länge und des Durchmessers erfolgt, um einerseits eine prozessierfähige Gießmasse und andererseits optisch einwandfrei Formkörper zu erhalten, so werden Gießformkörper erhalten, die, verglichen mit Gießformkörpern ohne dem Faserzuschlag, deutlich verbesserte Eigenschaften hinsichtlich der Schlagzähigkeit aufweisen, mithin also deutlich weniger rissanfällig bei einer entsprechenden mechanischen oder thermischen Beanspruchung sind, während die sonstigen Eigenschaften des Gießformkörpers, die aus dem polymeren Bindemittel und den eingelagerten Füllstoffpartikeln resultieren, erhalten bleiben bzw. von den eingebrachten Fasern nicht tangiert werden.

Als Polyamidfasern werden bevorzugt Fasern aus PA6 oder PA6.6 verwendet. Beide zeichnen sich durch einen hohen Schmelzpunkt von über 200° C aus, was im Hinblick auf eine thermische Beanspruchung des Gießformkörpers wichtig ist. Sie weisen auch eine hinreichend hohe Reißfestigkeit respektive eine hinreichend hohe Zugfestigkeit auf und eignen sich besonders gut zur Faserverstärkung.

In weiterer Konkretisierung sollten die Fasern eine Länge von 10 mm aufweisen. Insbesondere mit Fasern aus diesem Längenbereich wurden sehr gute Schlagzähigkeitswerte ermittelt, sie lassen sich gut und fest in die Bindemittelmatrix einbinden, ohne dass es zu Problemen hinsichtlich einer Knäuelbildung oder einer aufgrund zu hoher Viskosität fehlerhaften Sichtfläche kommt. Hierzu trägt auch bei, dass die Fasern gemäß der Erfindung einen Durchmesser von 0,1 ― 0,15 mm aufweisen. Fasern dieses Durchmessers sind hinreichend fest und weisen noch eine hinreichend große Oberfläche auf, um fest in die Bindemittelmatrix eingebunden werden zu können.

Die Fasern selbst können farblos oder eingefärbt sein, wobei ihre Färbung dann bevorzugt der eine Eigenfarbe aufweisenden, eingefärbten oder farbbeschichteten Füllstoffpartikel entspricht, beziehungsweise der Farbpigmentierung des Bindemittels des Gießkörpers entspricht.

Gemäß der Erfindung ist vorgesehen, dass ein an die Sichtseite des Formkörpers angrenzender Randbereich faserfrei ist und nur im verbleibenden Körpervolumen die Fasern verteilt vorliegen. Es hat sich herausgestellt, dass bei Verwendung von Fasern der angegebenen Art in der angegebenen Zuschlagmenge an der Sichtseite des Formkörpers sich ein, wenngleich sehr dünner, Randbereich ergibt, in dem keine oder eine vernachlässigbare Anzahl an Fasern vorliegen. Dies ist bei Verwendung der doch relativ kurzen und dünnen Fasern auf einen schwach ausgeprägten Sedimentationsprozess zurückzuführen, in dem die geringfügig schwereren Füllstoffe in der Gießform, die quasi auf dem Kopf steht, so dass die Sichtseite unten liegt, sich geringfügig an der Formoberfläche unter Ausbildung des äußerst dünnen Randbereichs ansammeln. Dieser Sedimentationsvorgang ist, nicht zuletzt aufgrund der Viskosität der Gießmasse respektive der Polymermatrix, gering ausgeprägt.

Die Fasern sind, wie bereits beschrieben, homogen im Körpervolumen verteilt, abgesehen von dem sehr dünnen, vorstehend beschriebenen Randbereich. Das heißt, dass bereits bei der Aufbereitung der Gießmasse dafür Sorge getragen wird, dass die Fasern in der zähflüssigen Gießmasse homogen verteilt sind, so dass sich eine entsprechende Verteilung in Verbindung mit der Einstellung der Grundausrichtung auch beim Einfüllen der Gießmasse in die Gießform ergibt und zwangsläufig auch beim fertigen Gießformkörper einstellt.

Um dem Gießformkörper eine verbesserte Schlagzähigkeit zu verleihen ist es zweckmäßig, wenn die Fasern möglichst fest in der Bindemittelmatrix eingebunden sind. Aus diesem Grund ist es besonders zweckmäßig, wenn die Fasern über oberflächliche reaktive Gruppen an das Bindemittel gebunden sind. Diese oberflächliche reaktive Gruppen können bereits faserseitig durch eine entsprechende Plasmabehandlung erzeugt werden. Durch Energie aus dem Plasma werden chemische Bindungen an der Polyamidfaser aufgebrochen. Diese offenen Bindungen können mit dem Bindemittel reagieren. Auch ist es möglich, über das Plasma zusätzliche chemisch funktionelle Gruppen an den Polyamidfasern anzulagern. In jedem Fall führt diese oberflächliche Aktivierung dazu, dass die Polyamidfasern sehr fest an das Bindemittel angebunden werden. In Verbindung mit einer hohen Reiß- oder Zugfestigkeit der Polyamidfasern kann eine sehr stark verbesserte Schlagzähigkeit erreicht werden.

Alternativ zur Aktivierung mittels eines Plasmas ist es auch denkbar, dass die Fasern mit einem Haftvermittler belegt sind, über den sie an das Bindemittel gebunden sind. Der verwendete Haftvermittler kann sich dabei nach der Art des verwendeten Bindemittels richten. Auch er dient letztlich dazu, die Polyamidfaser an das Bindemittel chemisch anzubinden.

Das Bindemittel selbst umfasst ein Monomer und ein darin gelöstes Polymer. Als Monomere können insbesondere Styrol, Acrylsäure oder Metacrylsäure bzw. deren Ester verwendet werden, denen zur Bildung der Bindemittellösung die entsprechenden Polymere zugefügt werden. Bevorzugt weist die Bindemittellösung eine Mischung aus Methylmethacrylat und Polymethylmethacrylat auf, wobei das Polymethylmethacrylat ein Copolymer mit den Bestandteilen Methylmethacrylat, Butylmethacrylat oder dergleichen sein kann. Der Anteil der Bindemittellösung bezogen auf die Reaktionsmasse sollte zwischen 10 ― 45 Gew.%, insbesondere zwischen 15 ― 40 Gew.% und vorzugsweise zwischen 20 ― 35 Gew.% betragen. Bei diesen Prozentangaben ist ein etwaiger zugegebener Vernetzer nicht der Bindemittellösung zugerechnet.

Das Verhältnis der Gewichtsanteile von Polymer zum Monomer beträgt bevorzugt zwischen 1 : 1 und 1 : 10, insbesondere zwischen 1 : 2 und 1 : 7 und vorzugsweise zwischen 1 : 3 und 1 : 5. Wird als Monomer Methylmethacrylat (MMA) und als Polymer Polymethylmethacrylat (PMMA) eingesetzt, so sollte beispielsweise der Masseanteil des PMMA an der Bindemittellösung aus MMA und PMMA zwischen 15 ― 30 % betragen, am Formteil sollte der MMA-Anteil bezogen auf die Masse des Formteils zwischen 15 ― 25 %, insbesondere zwischen 18 und 23 % betragen, während der PMMA-Anteil an der Formteilmasse zwischen 3 und 8 %, insbesondere zwischen 4 und 6 % beträgt.

Weiterhin kann das Bindemittel einen Vernetzer umfassen, mit einem Gewichtsanteil von wenigstens 0,2 % bezogen auf die Masse des Formteils. Der Vernetzeranteil kann auch relativ hoch sein, und z.B. mindestens 10 Gew.% bezogen auf den Anteil des Monomers in der Bindemittellösung betragen, vorzugsweise mehr als 15 % und insbesondere zwischen 20 ― 30 Gew.%.

Bei dem Vernetzer kann es sich um ein zweifach oder mehrfach funktionelles Monomer oder Polymer handeln, insbesondere ein zweifach oder mehrfach funktionelles Acrylat oder Polyacrylat, vorzugsweise Ethylenglycoldimethacrylat, Trimethylolpropantrimethacrylat oder Pentaerethrittriacrylat. Bei dem Vernetzer kann es sich auch um eine Kombination aus zwei oder mehreren jeweils zweifach oder mehrfach funktionellen Monomeren oder Polymeren handeln, insbesondere der zuvor beschriebenen Art. Der Vernetzer, der bevorzugt schneller als die polymerisierte Bindemittellösung polymerisiert, ist in der Reaktionsmasse gleichmäßig verteilt, so dass diese gleichförmig polymerisiert.

Wie beschrieben weist die Polymermatrix des Gießformkörpers Füllstoffpartikel auf. Der Masseanteil der Füllstoffpartikel bezogen auf die Masse des Gießformkörpers sollte zwischen 40 ― 85 Gew.%, insbesondere zwischen 60 ― 80 Gew.%, und vorzugsweise zwischen 65 ― 75 Gew.% betragen. Die verwendeten Füllstoffpartikel sollen eine gegenüber dem Bindemittel höheren Mohshärte aufweisen. Hierdurch können die mechanischen Eigenschaften, insbesondere die Abriebfestigkeit des hergestellten Formkörpers durch die Wahl der Füllstoffpartikel bestimmt oder jedenfalls weitgehend beeinflusst werden. Bevorzugt weisen mehr als 50 Gew.%, vorzugsweise mehr als Gew.75 % der Füllstoffpartikel eine Mohshärte von mindestens 6 auf, insbesondere von mindestens 7. Als hierfür verwendbare anorganische Füllpartikel können insbesondere Quarzsand, Siliziumdioxid, Silliziumcarbid, Glas, Aluminiumoxid oder Kohlenstoff in der Diamantmodifikation verwendet werden. Auch eine Zugabe von Calciumcarbonat ist denkbar, wobei die Mohshärte von Calciumcarbonat nur 3 ― 4 beträgt. Die Füllstoffpartikel sollten eine Korngröße zwischen 0,01 mm und 1 mm aufweisen. Vorzugsweise sollte die Partikelgröße zwischen 0,05 ― 0,3 mm liegen. Dabei ist es grundsätzlich denkbar, Füllstoffpartikel aus wenigstens zwei unterschiedlichen Größenfraktionen zu verwenden.

Bevorzugt werden natürlich gewonnene Quarzsande sowie aus Quarz hergestellte Mehle und deren Modifikationen eingesetzt. Vorteilhaft sind solche Quarzsande, die von großer chemischer Reinheit sind und insbesondere einen niedrigen Gehalt an Eisenoxid aufweisen.

Wie bereits beschrieben sind primär die Füllstoffpartikel für die Farbgebung der Gieß- bzw. Reaktionsmasse respektive des Gießformkörpers verantwortlich. Sie können eine Eigenfarbe aufweisen, die farbbestimmend ist. Sie können alternativ auch eingefärbt oder farbbeschichtet sein. Wird jedoch eine Körperfarbe verlangt, die über die Füllstoffpartikelfärbung nicht eingestellt werden kann, so ist es denkbar, wenn der Gießmasse Farbpigmente zugegeben werden. Die bevorzugt gleichmäßig verteilten Farbpigmente können anorganischer Natur sein, jedoch können auch organisch basierte Farbpigmente verwendet werden. Alternativ oder zusätzlich können auch Glanzpartikel, die dem Gießformkörper einen Metallicglanz verleihen, zugegeben werden.

Der Gießformkörper selbst ist bevorzugt ein Spülbecken, insbesondere eine Küchenspüle. Es kann sich bei ihm aber auch um ein Waschbecken oder eine Duschtasse handeln, oder um eine Küchenarbeitsplatte oder Ähnliches.

Neben dem Gießformkörper selbst betrifft die Erfindung ferner ein Verfahren zur Herstellung eines Gießformkörpers der beschriebenen Art. Dieses zeichnet sich dadurch aus, dass in eine aushärtbare polymere Bindemittellösung sowohl Füllstoffpartikel als auch Fasern aus Polyamid mit einer Länge von 5 ― 20 mm, vorzugsweise von einem Durchmesser von 0,05 ― 0,2 mm zur Bildung einer Gießmasse homogen eingemischt werden, wobei der Anteil der Fasern 0,02 ― 0,5 Gew.% bezogen auf die Gesamtmasse der Gießmasse beträgt, wonach die Gießmasse in eine Gießform gegossen wird, der nach Aushärten des Bindemittels der Gießformkörper entnommen wird. Vorzugsweise sollten die verwendeten Fasern eine Reißfestigkeit von wenigstens 250 N/mm² aufweisen.

Als Fasern werden bevorzugt solche aus PA6 oder PA6.6 verwendet. Die Länge der verwendeten Fasern sollte zwischen 7 ― 15 mm, insbesondere von 8 ― 12 mm und besonders bevorzugt von 10 mm betragen, der Durchmesser sollte zwischen 0,075 ― 0,175 mm, insbesondere von 0,1 ― 0,15 mm liegen.

Der zugegebene Faseranteil sollte in weiterer Konkretisierung zwischen 0,025 - 0,25 Gew%, vorzugsweise 0,03 ― 0,2 Gew.%, insbesondere aber 0,05 ― 0,15 Gew.% bezogen auf die Gesamtmasse der Gießmasse betragen.

Weiterhin können entweder farblose Fasern verwendet werden, also Fasern, die letztlich über keine prägnante Eigenfarbe verfügen. Alternativ können auch Fasern verwendet werden, die eingefärbt sind, wobei die Faserfarbe der Farbe der Eigenfärbung des Gießformkörpers entspricht.

Besonders bevorzugt werden Fasern verwendet, die oberflächlich zur Bildung reaktiver Gruppen plasmabehandelt sind, oder die mit einem Haftvermittler belegt sind. Hierüber wird sichergestellt, dass die Fasern besonders fest in die Bindemittelmatrix eingebunden sind, da sie über die reaktiven Gruppen oder dem Haftvermittler chemisch an das Bindemittel gebunden sind.

Als Bindemittel wird eine Lösung aus einem Monomer und einem darin gelösten Polymer und bevorzugt einem Vernetzer verwendet. Als Monomer wird bevorzugt Methylmethacrylat (MMA), als Polymer Polymermethacrylat (PMMA) verwendet, während als gegebenenfalls zugefügter Vernetzer Trimethylolpropantrimethacrylat (TRIM) verwendet wird.

Bezüglich weiterer verfahrensrelevanter Merkmale betreffend die verwendeten Fasern, Monomere, Polymere, Vernetzer, Füllstoffe oder Pigmente wird auf die vorstehenden Ausführungen zum Gießformkörper selbst verwiesen, die gleichermaßen auch für das Verfahren relevant sind.

Weitere Vorteile und Einzelheiten der Erfindung ergeben sich aus den im Folgenden beschriebenen Ausführungsbeispielen sowie anhand der Zeichnungen. Dabei zeigen:
- Fig. 1: eine Perspektivansicht in Form einer Prinzipdarstellung eines erfindungsgemäß hergestellten Gießformkörpers in Form einer Küchenspüle,
- Fig. 2: eine Prinzipdarstellung einer Schnittansicht durch den Gießformkörper aus Fig. 1,
- Fig. 3: eine Tabelle umfassend Schlagzähigkeitsmesswerte zu einem faserfreien Vergleichs-Probekörper und 48 Probekörpern mit unterschiedlichen Faserzugaben, wobei die Fasern oberflächlich unbehandelt waren,
- Fig. 4: eine Tabelle mit Ergebnissen einer visuellen Oberflächenbetrachtung der Sichtseite der Probenkörper gemäß der vorstehenden Tabellen nach Fig. 3,
- Fig. 5: eine Tabelle mit Schlagzähigkeitsmesswerten für den faserfreien Vergleichs-Probekörper und 48 Probenkörpern mit unterschiedlichen Faserzugaben, deren Oberfläche über ein Plasma aktiviert war,
- Fig. 6: eine Tabelle mit Ergebnissen einer visuellen Oberflächenbetrachtung der Sichtseite der Probenkörper gemäß der vorstehenden Tabellen nach Fig. 5, und
- Fig. 7: eine Tabelle betreffend Reologiemesswerte zu den verwendeten Gießmassen zur Herstellung der Probenkörper gemäß Fig. 3.

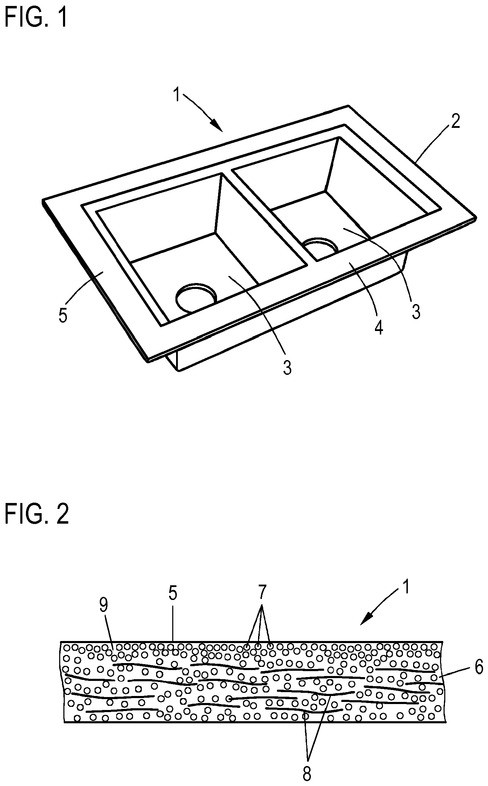

Fig. 1 zeigt in einer Perspektivansicht einen gattungsgemäßen Gießformkörper 1 aus einem Kompositwerkstoff mit einem ausgehärteten polymeren Bindemittel und darin eingelagerten Füllstoffpartikeln. Es handelt sich im gezeigten Beispiel um eine Küchenspüle 2 mit exemplarisch zwei separaten Spül- oder Ablaufbecken 3, die jeweils über Seitenwände und einen Boden begrenzt sind. Oberseitig umlaufend ist ein relativ breiter Rand 4 ausgebildet. Der Gießformkörper 1 weist eine Sichtseite 5 auf, also eine Oberfläche, die in der Einbaustellung sichtbar ist. Diese Sichtseite ist an allen vorderseitigen Flächen sowohl im Bereich der Becken 3 als auch des Randes 4 gegeben.

Zur Herstellung des Gießformkörpers wird eine geschlossene Gießform eingesetzt, in welche die Reaktionsmasse, also die Gießmasse enthaltend unter anderem das polymere Bindemittel bzw. die Bindemittellösung und darin eingelagerte Füllstoffpartikel sowie im erfindungsgemäßen Beispiel eingebrachte Polyamidfasern eingebracht wird. Die Gießmasse weist eine hinreichende, das Einfüllen in die Gießform ermöglichende Viskosität auf. In der Gießform wird die eingebrachte Gießmasse durch Energiezufuhr erwärmt, so dass es zur Polymerisation und damit zum Aushärten des polymeren Bindemittels kommt. Als polymeres Bindemittel wird eine entsprechende Bindemittellösung bevorzugt aus MMA als Monomer und PMMA als Polymer verwendet. Der Masseanteil des PMMA an der Lösung aus MMA und PMMA beträgt bevorzugt zwischen 15 ― 30 %, allgemein sollte das Verhältnis der Gewichtsanteile des Polymers zum Monomer in der Bindemittelösung zwischen 1:1 und 1:10, insbesondere zwischen 1:2 und 1:7 und vorzugsweise zwischen 1:3 und 1:5 betragen. Der Bindemittellösung wird bevorzugt ein Vernetzer, vorzugsweise Trimethylolpropantrimethacrylat (TRIM) zugegeben. Der Anteil des Vernetzers kann kleiner 10 Gew.% des Monomeranteils in der Bindemittellösung sein. Er kann aber auch bevorzugt mehr als 10 Gew.%, bevorzugt zwischen 10 ― 30 Gew.% bezogen auf den Monomeranteil in der Bindemittellösung betragen. Weiterhin weist die Gießmasse wie beschrieben Füllstoffpartikel auf, wobei der Gehalt der vorzugsweise anorganischen Füllstoffpartikel zwischen 55 ― 85 Gew.%, vorzugsweise zwischen 60 ― 80 Gew.% und insbesondere zwischen 65 und 75 Gew.%, bezogen auf die Reaktionsmasse, beträgt. Bevorzugt werden mineralische anorganische Füllstoffe, insbesondere kristalline Füllstoffe, wie beispielsweise Quarzsand verwendet. Alternativ kann auch Glas, Siliziumcarbid, Aluminiumoxid oder Kohlenstoff in der Diamantmodifikation oder Calciumcarbonat verwendet werden. Die Füllstoffpartikel sollten eine Korngröße zwischen 0,01 ― 1 mm aufweisen und können gegebenenfalls in unterschiedlichen, differenzierbaren Größenfraktionen vorhanden sein.

Die zugegebenen Polyamidfasern weisen eine Länge von 8 ― 12 mm und bevorzugt von 10 mm, und einen Durchmesser von 0,1 ― 0,15 mm auf. Ihr Anteil beträgt zwischen 0,05 - 0,2 Gew.%, bezogen auf die Gesamtmasse der Gießmasse (respektive am ausgehärteten Formkörper bezogen auf die Gesamtmasse des Formkörpers).

Als Fasern sind bevorzugt PA6 oder PA6.6-Fasern verwendet. Die verwendeten Fasern sollten eine Reißfestigkeit von wenigstens 250 N/mm² aufweisen.

Fig. 2 zeigt in Form einer Prinzipdarstellung eine Schnittansicht durch den Rand 4 des Gießformkörpers 1 aus Fig. 1. Üblicherweise beträgt die Stärke oder Dicke der entsprechenden Abschnitte des Gießformkörpers zwischen 5 ― 15 mm.

Fig. 2 zeigt einerseits das ausgehärtete polymere Bindemittel 6, also die Bindemittelmatrix. In dieser sind die Füllstoffpartikel 7 in weitgehend homogener Verteilung eingebunden. Ebenso sind in dem Bindemittel 6 die Polyamidfasern 8 eingebunden. Sie liegen, wie Fig. 2 zeigt, bevorzugt mit einer Grundausrichtung im Wesentlichen parallel zur Sichtseite 5 des Gießformkörpers 1, das heißt, sie verlaufen näherungsweise parallel dazu. Hierunter ist zu verstehen, dass der Winkel, den die Fasern oder beispielsweise eine approximierte, an die jeweilige Polyamidfaser 8 gelegte Gerade mit der Ebene der Sichtseite 5 einnimmt, bevorzugt kleiner 15°, vorzugsweise kleiner 10° und insbesondere kleiner 5° ist. Die Polyamidfasern 8 verlaufen natürlich nicht nur parallel zur Zeichenebene, sondern stehen unter beliebigen Winkeln zur gleichen Ebene, verlaufen also auch in und aus der Zeichenebene. Ihre primäre Grundausrichtung richtet sich jedoch nach der lokalen Strömungsrichtung der Gießmasse innerhalb der Gießform.

Am fertigen Gießformkörper bildet sich ein unmittelbar an die Sichtseite 5 anschließender, sehr schmaler Randbereich 9 mit einer Breite im Bereich von 0,1-2 mm aus, der faserfrei ist. Dieser Randbereich 9 ist nur durch das ausgehärtete Bindemittel 6 und die Füllstoffpartikel 7 gebildet. Da damit randbereichsseitig keine Polyamidfasern 8 vorhanden sind, sind diese folglich an der Sichtfläche 5 nicht sichtbar. Dieser Randbereich bildet sich aus, wenn hinreichend dünne und lange Fasern mit den eingangs beschriebenen Maßen, verwendet werden, und der Faseranteil bezogen auf die Gesamtmasse der Gießmasse wie beschrieben gewählt wird.

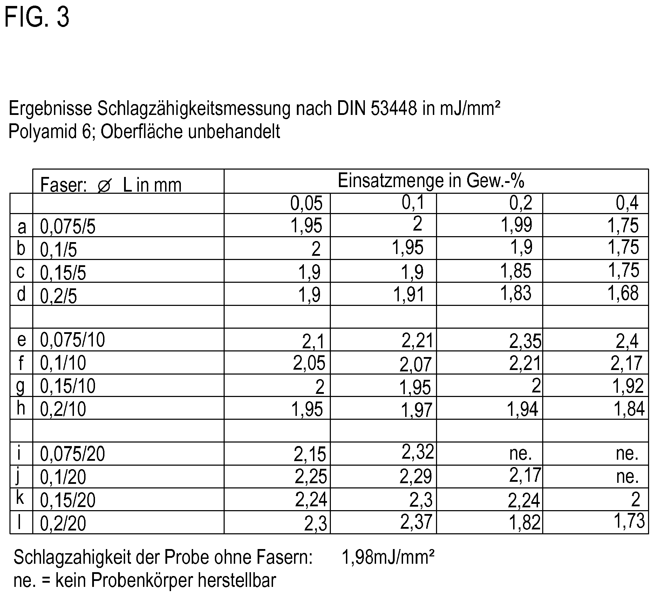

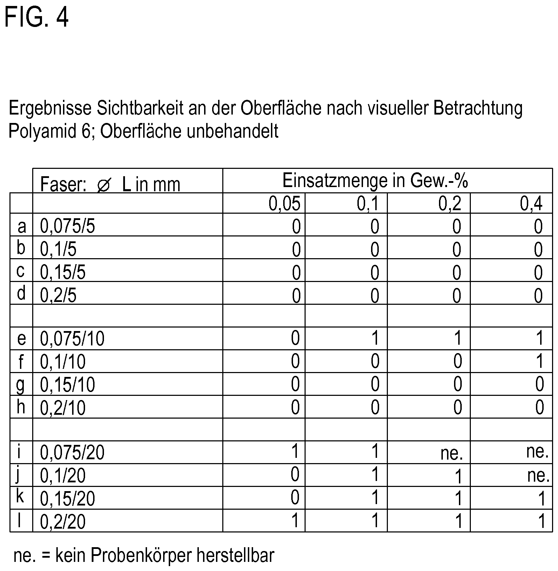

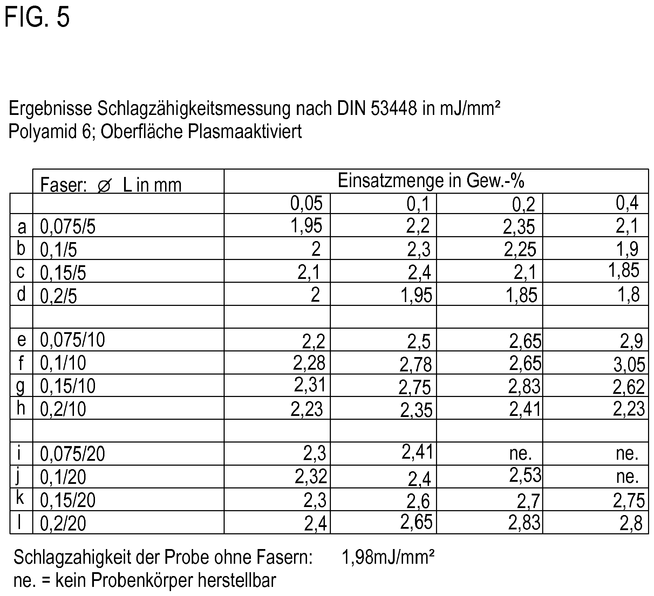

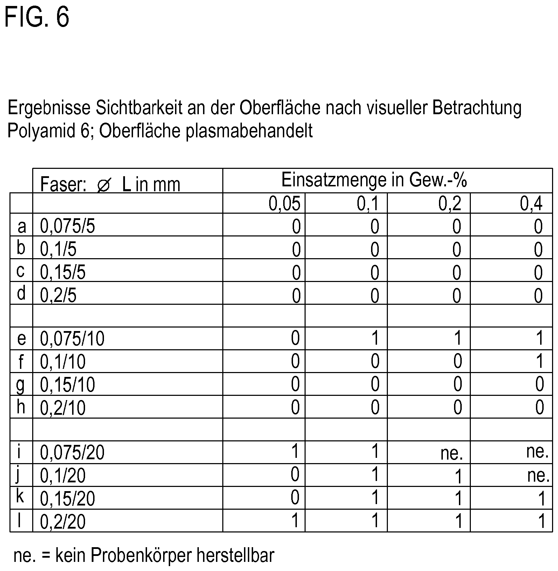

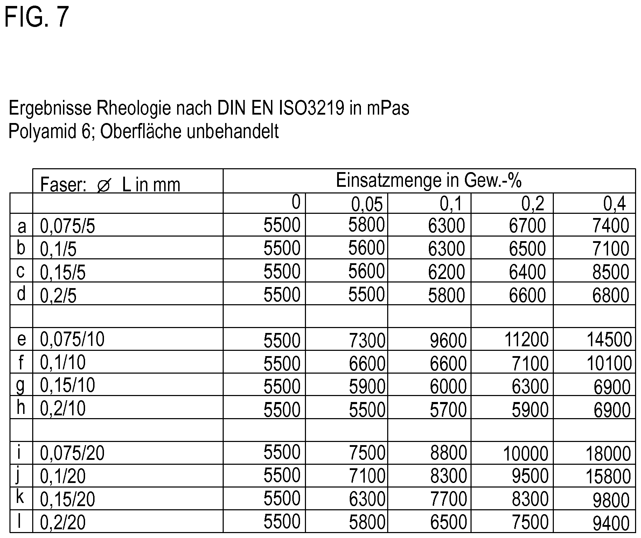

Die in den Fig. 3 ― 6 gezeigten Tabellen zeigen Schlagzähigkeitsmesswerte (Fig. 3 und 5) undErgebnisse einer visuellen Oberflächenbetrachtung der Sichtseite (Fig. 4 und 6) von insgesamt 96 unterschiedlichen Probekörpern respektive 96 unterschiedlichen Gießmassen (wobei nur die Probenkörper gemäß der Erfindung sind, die eine Anspruchsgemäße Einsatzmenge und Faserlänge sowie einen Anspruchsgemäßen Faserdurchmesser in Kombination aufweisen) und einem Vergleichs-Probekörper bzw - Gießmasse, während Fig. 7 Rheologiemesswerte der Probekörper aus Fig. 3 und des Vergleichs- Probekörpers zeigt.

Die hergestellten Gießmassen waren in Bezug auf die Bindemittellösung, die Füllstoffpartikel, den Vernetzer und etwaige Additive etc. alle gleich, lediglich die Art und Menge der zugegebenen Polyamidfasern variiert von Gießmasse zu Gießmasse respektive Probekörper zu Probekörper.

Es wurden folgende Gießmassen hergestellt, wobei in der nachfolgenden Tabelle die jeweiligen spezifischen Faserzugaben nicht angegeben sind:

| **Material** | **Einsatzmenge (Gew.%)** |
|---|---|
| MMA | ca. 19,1 |
| PMMA | ca. 4,6 |
| Füllstoff 1 (Quarzsand 0,05 - 0,3 mm) | ca. 52 |
| Füllstoff 2 (Cristobalitmehl 0,01 - 0,05 mm) | ca. 18 |
| Vernetzer (TRIM) | ca. 4,2 |
| Additive, Peroxid, Pigment | ca. 2,1 |
| | |
| SUMME: | 100 |

Den in den Fig. 3 ― 6 entnehmbaren, mit a - l gekennzeichneten Formkörpern respektive Gießmassen wurden jeweils unterschiedliche Fasern zugegeben, die sich in dem Faserdurchmesser sowie der Faserlänge unterschieden.

Den Gießmassen respektive den Probekörpern a - d wurden Fasern mit einer Länge von 5 mm zugegeben, wobei der Faserdurchmesser zwischen 0,075 mm, 0,1 mm, 0,15 mm und 0,2 mm bei den Gießmassen bzw. Probekörpern variierte.

Den Gießmassen respektive Probekörpern e ― h wurden Fasern in einer Länge von 10 mm zugegeben, auch hier variierte der Faserdurchmesser zwischen 0,075 mm, 0,1 mm, 0,15 mm und 0,2 mm.

Den Gießmassen respektive Probekörpern i ― l wurden schließlich Fasern mit einer Länge von 20 mm und variierenden Faserdurchmessern von 0,075mm, 0,1 mm, 0,15 mm und 0,2 mm zugegeben.

Darüber hinaus variierte innerhalb jeder Gießmassen- oder Prüfkörpergruppe a - d, e ― h und i ― l die jeweilige Menge an zugegebener Faser, wie die Spalten der in den Fig. 3 und 5 gezeigten Tabellen zu entnehmen ist (Einsatzmenge in Gew.%).

Der ersten Gießmassen- oder Probenkörpergruppe wurde eine Fasermenge von 0,05 Gew.% bezogen auf die Gesamtmasse der Gießmasse zugegeben. Einer zweiten Gießmassen- oder Probenkörpergruppe wurde eine Fasermenge von 0,1 Gew.% bezogen auf die Gesamtmasse des Formkörpers zugegeben. Einer dritten Gießmassen- oder Probenkörpergruppe wurde eine Fasermenge von 0,2 Gew.% bezogen auf die Gesamtmasse des Formkörpers zugegeben. Einer vierten Gießmassen- und Probenkörpergruppe wurde schließlich eine Fasermenge von 0,4 Gew.% bezogen auf die Gesamtmasse der Gießmasse zugegeben.

Auf diese Weise wurden bei 12 in der Faserart unterschiedlichen Probekörpern und vier unterschiedlichen Faserzugabemengen insgesamt 48 Gießmassen angesetzt. Durch die Faserzugabe erhöhte sich die Viskosität der jeweiligen Gießmasse, wobei die Zunahme teilweise derart groß war, dass die Gießmasse nicht prozessierbar war, also nicht vergossen werden konnte. Daher konnten nicht aus allen Gießmasseansätzen Probekörper hergestellt werden. Die Ansätze, zu denen keine Probekörper gefertigt wurden, sind in den Tabellen gemäß der Fig. 3 und 5 mit "ne." gekennzeichnet.

Zusätzlich wurde ein Vergleichs-Probekörper aus der reinen Gießmasse ohne Faserzugabe hergestellt.

In den Fig. 3 und 5 sind die Messwerte einer Schlagzähigkeitsmessung nach DIN 53448 in mJ/mm² angegeben. Die jeweils aus den jeweiligen Gießmassen hergestellten und untersuchten Probekörper a ― l wurden DIN-gemäß hergestellt. Die Schlagzähigkeitsmessungen wurden mit einem Pendelschlagwerk der Firma Zwick/Roell "HIT5P" durchgeführt.

Die den Gießmassen zugegebenen Fasern der gemäß Fig. 3 untersuchten Probekörper waren oberflächlich unbehandelt, das heißt, es handelte sich um PA6-Fasern, die weder durch eine Plasmabehandlung aktivierte Oberflächen noch durch eine Haftvermittler belegte Oberflächen aufwiesen.

Der aus der Gießmasse ohne Faserzugabe hergestellte Vergleichs-Probekörper zeigt einen Schlagzähigkeitsmesswert von 1,98 mJ/mm².

Die der Tabelle gemäß Fig. 3 zu entnehmenden Messwerte zeigen bei Verwendung der Oberfläche unbehandelte Fasern eine Verbesserung, also Erhöhung der Schlagzähigkeitsmesswerte insbesondere bei den längeren Fasern, also den Fasern mit einer Länge von 10 mm und 20 mm und einer zugegebenen Fasermenge von 0,05 und 0,1 Gew.%, nur teilweise auch bei höheren Zugaben. Eine Fasermenge von 0,4 Gew.% führte in der Regel zu keiner Verbesserung, verglichen mit dem Vergleichs-Probekörper mit einem Schlagzähigkeitsmesswert von 1,98 mJ/mm² bei den kurzen Fasern mit 5 mm, bei den 10 mm Fasern meist zu schadhaften Probekörpern aufgrund zu hoher Viskosität und bei den 20 mm Fasern war eine Prozessierbarkeit nicht mehr gegeben.

Fig. 4 zeigt eine Tabelle mit Angaben zu einer visuellen Inaugenscheinnahme der Oberfläche der Probekörper, die der Sichtfläche 5 am fertigen Formkörper entspricht. In dieser ist mit "0" gekennzeichnet, wenn die betrachtete Probenfläche fehlerfrei war, während mit "1" angegeben ist, dass die Fasern an der Oberfläche zu erkennen waren, oder aufgrund mangelnder Prozessierbarkeit sich sonstige Fehlstellen wie z. B. Risse oder Löcher zeigten.

Bei den Fasern mit einer Länge von 10 mm zeigten sich insbesondere bei den dünneren verwendeten Fasern mit einem Durchmesser von 0,075 mm bei einer hohen Faserzugabe von ≥ 0,1 Gew.% sichtbare Fehler in Form von Löchern oder Rissen aufgrund der zu hohen Viskosität.

Erwartungsgemäß waren Gießmassen mit Fasern mit einer Länge von 20 mm zum Teil nicht mehr prozessierbar (hohe Viskosität und Knäuelbildung) bei dünnen Fasern und hoher Einsatzmenge, bzw. zeigten sich Fehlstellen an den Sichtseiten der Proben.

Ein Vergleich mit Fig. 3 und den Schlagzähigkeitsmesswerten zeigt, dass bei Verwendung der unbehandelten Fasern vorzugsweise Fasern mit einer Länge von 10 mm und Durchmessern zwischen 0,075 und 0,15 mm in einer Zugabemenge von 0,05 ― 0,2 Gew.% zugegeben werden sollten. Insbesondere die Probenkörper e und f zeigten zum Teil merkliche Verbesserungen der Schlagzähigkeitsmesswerte.

Auch Fasern mit einer Länge von 20 mm können zugegeben werden, jedoch ohne an der Sichtfläche erkennbaren Fehlern nur mit einer geringen Zugabemenge von 0,05 Gew.%

Fig. 5 zeigt eine entsprechende Tabelle, wobei wiederum die Probenkörper a ― e dargestellt sind, denen, wie bereits beschrieben, diesmal an der Oberfläche über ein Plasma aktivierte Fasern zugegeben wurden. Die zugegebenen Fasern variierten wie bereits beschrieben wieder in Länge und Durchmesser, auch die Einsatzmengen wurden, wie bezüglich Fig. 3 bereits beschrieben, variiert. Der Vergleichs-Probekörper entspricht dem aus Fig. 3, da dieselbe Gießmasse verwendet wurde, er wies einen Schlagzähigkeitswert von 1,98 mJ/mm² auf.

Ersichtlich zeigen bereits die Probekörper a ― d insbesondere bei den Zugabemengen von 0,05, 0,1 und 0,2 Gew.% signifikante Zunahmen der Schlagzähigkeitsmesswerte, der Maximalwert betrug hier bei dem Probekörper c bei einer Fasermenge von 0,1 Gew.% 2,4 mJ/mm². Wieder zeigt sich der Effekt, dass je nach Probekörper mit zunehmender Fasermenge die Schlagzähigkeitsmesserwerte teilweise wieder abnehmen. Dieser Effekt ist darauf zurückzuführen, dass bei abnehmender Faserlänge und zunehmendem Faserquerschnitt in Verbindung mit dem zunehmenden Faseranteil sich die Störstellenwirkung der Fasern im Materialverbund stärker auswirkt als die Haftungskräfte.

Noch signifikanter fällt die Zunahme der Schlagzähigkeitsmesswerte bei den Probekörpern e ― h aus. Hier zeigte der Probekörper f bei einer Fasermenge von 0,4 Gew. % den höchsten Schlagzähigkeitswert von 3,05 mJ/mm². Jedoch zeigt sich insgesamt, dass alle Probekörper e ― h deutlich höhere Schlagzähigkeitsmesswerte zeigen, als der Vergleichsprobekörper.

Dies gilt auch in Bezug auf die Probekörper i ― l. Auch diese zeigen signifikante Erhöhungen der Schlagzähigkeitsmesswerte.

Die deutliche Verbesserung der Schlagzähigkeitsmesswerte, auch im Hinblick auf die Messewerte gemäß Fig. 3 zu den unbehandelten Fasern, ist darauf zurückzuführen, dass aufgrund der Plasmaaktivierung der Oberfläche dortseits reaktive Gruppen gegeben sind, die zu einer deutlich festeren Verbindung der Fasern mit der Bindemittelmatrix führen, das heißt, dass die reaktiven Gruppen der Faseroberfläche an das Bindemittel angebunden haben.

Fig. 6 zeigt die Ergebnisse der visuellen Untersuchung der Oberfläche der Probekörper a ― l gemäß Fig. 5. Diese Ergebnisse entsprechen denen, wie bereits aus Fig. 4 zu entnehmen. Es zeigt sich, dass mit zunehmender Faserlänge, zunehmendem Durchmesser und zunehmender Zugabemenge die Anzahl der Probekörper, an denen an der Sichtfläche Fehlstellen zu erkennen waren, steigt. Ein Vergleich mit Fig. 5 zeigt, dass demzufolge insbesondere die Probekörper f und g mit Zuschlagmengen von 0,05, 0,1 und 0,2 Gew.% hervorragende Ergebnisse sowohl hinsichtlich der verbesserten Schlagzähigkeit als auch der Möglichkeit der Erzeugung einer einwandfreien Sichtfläche zweckmäßig sind. Sie liefern zum Teil deutlich gestiegene Schlagzähigkeitswerte.

Auch Fasern mit einer Länge von 20 mm haben sich als durchaus zweckmäßig erwiesen, sowohl im Hinblick auf eine verbesserte Schlagzähigkeit als auch auf der Herstellung einer optisch einwandfreien Sichtfläche. Dies jedoch nur bei relativ niedrigen Zugabemengen.

Fig. 7 zeigt schließlich eine Tabelle betreffend gerundete Rheologiemesswerte zu den unterschiedlichen Gießmassen. Die Messwerte geben die dynamische Viskosität an. Untersucht wurden zu jeder Gießmasse a ― l enthaltend unbehandelte PA6-Fasern (also entsprechend der Fig. 3) jeweils 160 ml Gießmasse. Die Rheologiemessung wurde in Anlehnung nach DIN EN ISO 3219 durchgeführt unter Verwendung eines dynamischen Viskosimeters der Firma Brookfield "R/S Rheometer SST" durchgeführt. Die angegebenen Messwerte sind in mPas angegeben. Der Rheologiemesswert ergibt sich aus drei Messbereichen mit einer Umdrehung von 10 1/min. Die Messwerte werden ab dem zweiten Messintervall ermittelt, die Intervalle liegen in einem Zeitbereich von 40-50 Sekunden, 80-90 Sekunden und 120-130 Sekunden.

Die Vergleichs-Gießmasse ohne Faserzugabe wies eine dynamische Viskosität von 5.500 mPas auf. Es können auch Gießmassen mit deutlich abweichenden Viskositäten verarbeitet werden, bei entsprechender Zugabe von Fasern hat sich aber gezeigt, dass die daraus resultierende Viskositätszunahme wiederum ab einem bestimmten Wert zu den genannten Fehlstellen an der Oberfläche beispielsweise einer nicht mehr gegebenen Prozessierbarkeit der Masse führt.

Der Tabelle ist zu entnehmen, dass zu nahezu jeder untersuchten Gießmasse die dynamische Viskosität mit zunehmender Fasermenge steigt. Des Weiteren ist zu erkennen, dass die dynamische Viskosität innerhalb gleicher zugegebener Fasermengen mit zunehmendem Faserdurchmesser abnimmt. Dies ist darauf zurückzuführen, dass die gesamte Faseroberfläche mit zunehmendem Faserdurchmesser bei gleicher zugegebener Fasermenge abnimmt, was sich positiv auf den Viskositätswert auswirkt.

Fertigungstechnisch hat sich herausgestellt, dass eine Gießmasse, deren Viskosität infolge der Faserzugabe auf das Doppelte oder mehr, verglichen mit der Viskosität der Gießmasse ohne Faserzugabe, steigt, nicht mehr verarbeitbar ist. Im Hinblick auf die Ergebnisse der Sichtprüfung gemäß der Fig. 4 und 6 zeigt sich, dass wiederum insbesondere bei den Probekörpern f und g und Zugabemengen von 0,05, 0,1 und 0,2 Gew.% noch hinreichend gute Viskositätswerte gegeben sind, die die Herstellung von Probekörpern und damit Gießformkörpern erlauben, die sowohl in der Schlagzähigkeit deutlich verbessert sind, als auch optisch einwandfreie Sichtflächen aufweisen. Innerhalb der Probekörper mit Fasern einer Länge von 20 mm erlauben lediglich die Gießmassen j und k mit zugegebenen Fasermengen von 0,05 Gew.% die prozesstechnisch einwandfreie Herstellbarkeit von in der Schlagzähigkeit verbesserten Probekörpern und damit Gießformkörpern mit einwandfreier Sichtfläche.

Die Rheologiemesswerte zu den Gießmassen a-l enthaltend die plasmabehandelten Fasern gemäß Fig. 5 sind, da sie denen aus Fig. 7 entsprechen, nicht separat dargestellt.

Insgesamt zeigen die Messergebnisse, dass bevorzugt Fasern, die oberflächlich aktiviert sind, insbesondere durch eine Plasmabehandlung, besonders deutliche Verbesserungen der Schlagzähigkeit eines Gießformkörpers liefern. Im Hinblick auf die Erzeugung einer optisch einwandfreien Sichtfläche und die Möglichkeit, die Gießmasse trotz Faserzugabe hinreichend viskos zu halten, um sie ohne Weiteres prozessieren zu können, sollten Fasern einer mittleren Länge von ca. 7 ― 15 mm, insbesondere 8 - 12 mm und besonders bevorzugt von 10 mm verwendet werden, wobei der Faserdurchmesser zwischen 0,075 und 0,175 mm, bevorzugt zwischen 0,1 ― 0,15 mm liegen sollte.

Da die Fasern bei einwandfreien Gießformkörpern nicht an der Oberfläche zu sehen sind, beeinflussen sie zwangsläufig die mechanischen Eigenschaften der Oberfläche respektive Sichtfläche nicht, das heißt, dass diese nach wie vor die sich insbesondere durch den Gießmassenansatz, wie er den Probekörpern zugrunde lag, gegebene hohe Kratzfestigkeit aufweisen.

Besonders bevorzugt werden Gießformkörper aus Bindemittelansätzen hergestellt, wie sie in DE 10 2004 055 365 A1 oder DE 10 2010 046 627 A1 beschrieben sind, die hinsichtlich der dort beschriebenen Bindemittellösungen bzw. Gießmassen vollinhaltlich in den Offenbarungsgehalt der vorliegenden Anmeldung integriert werden. Das heißt, dass sämtliche dort enthaltenen offenbarten Merkmale vollumfänglich zum Offenbarungsgehalt der vorliegenden Anmeldung gehören.

## Patentansprüche

1. Gießformkörper aus einem Kompositwerkstoff mit einem ausgehärteten polymeren Bindemittel und darin eingelagerten Füllstoffpartikeln, wobei in dem Bindemittel (6) regellos verteilte Fasern (8) aus Polyamid eingebracht sind, wobei die Fasern (8) mit einer Grundausrichtung im Wesentlichen parallel zur Sichtseite (5) des Gießformkörpers (1) liegen, wobei ein an die Sichtseite des Gießformkörpers (1) angrenzender Randbereich (9) faserfrei ist und nur im verbleibenden Körpervolumen die Fasern (8) verteilt vorliegen, und wobei die Fasern eine Länge von 8 - 12 mm und einen Durchmesser von 0,1 ― 0,15 mm aufweisen und der Anteil der Fasern (8) 0,05 ― 0,2 Gew.% bezogen auf die Gesamtmasse des Gießformkörpers (1) beträgt.

2. Gießformkörper nach Anspruch 1, **dadurch gekennzeichnet, dass** die Fasern (8) aus PA6 oder PA6.6 sind.

3. Gießformkörper nach Anspruch 1 oder 2, **dadurch gekennzeichnet, dass** die Fasern (8) eine Länge von 10 mm aufweisen.

4. Gießformkörper nach einem der vorangehenden Ansprüche, **dadurch gekennzeichnet, dass** die Fasern eine Reißfestigkeit von wenigstens 250 N/mm² aufweisen.

5. Gießformkörper nach einem der vorangehenden Ansprüche, **dadurch gekennzeichnet, dass** die Fasern (8) farblos oder der Färbung des Gießformkörpers entsprechend gefärbt sind.

6. Gießformkörper nach einem der vorangehenden Ansprüche, **dadurch gekennzeichnet, dass** die Fasern (8) abgesehen von dem Randbereich (9) homogen verteilt sind.

7. Gießformkörper nach einem der vorangehenden Ansprüche, **dadurch gekennzeichnet, dass** die Fasern (8) über oberflächliche reaktive Gruppen an das Bindemittel (6) gebunden sind.

8. Gießformkörper nach einem der Ansprüche 1 bis 6, **dadurch gekennzeichnet, dass** die Fasern (8) mit einem Haftvermittler belegt sind, über den sie an das Bindemittel (6) gebunden sind.

9. Gießformkörper nach einem der vorangehenden Ansprüche, **dadurch gekennzeichnet, dass** das Bindemittel (6) ein Monomer und ein darin gelöstes Polymer umfasst.

10. Gießformkörper nach Anspruch 9, **dadurch gekennzeichnet, dass** das Monomer Methylmethacrylat und das Polymer Polymethylmethacrylat ist.

11. Gießformkörper nach einem der vorangehenden Ansprüche, **dadurch gekennzeichnet, dass** das Bindemittel (6) einen Vernetzer umfasst.

12. Gießformkörper nach Anspruch 11, **dadurch gekennzeichnet, dass** der Vernetzer Trimethylolpropantrimethacrylat ist.

13. Gießformkörper nach einem der vorangehenden Ansprüche, **dadurch gekennzeichnet, dass** der Masseanteil der Füllstoffpartikel (7) bezogen auf die Masse des Gießformkörpers (1) zwischen 40 ― 85%, insbesondere zwischen 60 ― 80 %, vorzugsweise zwischen 65 ― 75% beträgt.

14. Gießformkörper nach einem der vorangehenden Ansprüche, **dadurch gekennzeichnet, dass** er anorganische Füllkörperpartikel (7), insbesondere aus Quarzsand, Quarzmehl, Siliziumdioxid, Siliziumcarbid, Glas, Aluminiumoxid oder Calciumcarbonat enthält.

15. Gießformkörper nach einem der vorangehenden Ansprüche, **dadurch gekennzeichnet, dass** die Füllstoffpartikel (7) eine Korngröße zwischen 0,01 mm und 2 mm aufweisen.

16. Gießformkörper nach Anspruch 15, **dadurch gekennzeichnet, dass** Füllstoffpartikel (7) aus wenigstens zwei unterschiedlichen Größenfraktionen vorhanden sind.

17. Gießformkörper nach einem der vorangehenden Ansprüche, **dadurch gekennzeichnet, dass** er ein Spülbecken, ein Waschbecken, eine Duschtasse oder eine Arbeitsplatte ist.

18. Verfahren zur Herstellung eines Gießformkörpers nach einem der vorangehenden Ansprüche, wobei in eine aushärtbare polymere Bindemittellösung sowohl Füllstoffpartikel als auch Fasern aus Polyamid mit einer Länge von 8 - 12 mm, einem Durchmesser von 0,1 ― 0,15 mm zur Bildung einer Gießmasse homogen eingemischt werden, wobei der Anteil der Fasern 0,05 ― 0,2 Gew.% bezogen auf die Gesamtmasse der Gießmasse beträgt, wonach die Gießmasse in eine Gießform gegossen wird, derart, dass die Fasern (8) mit einer Grundausrichtung im Wesentlichen parallel zur Sichtseite (5) des Gießformkörpers (1) liegen und dass ein an die Sichtseite des Gießformkörpers (1) angrenzender Randbereich (9) faserfrei ist und nur im verbleibenden Körpervolumen die Fasern (8) verteilt vorliegen, wobei nach Aushärten des Bindemittels der Gießformkörper der Gießform entnommen wird.

19. Verfahren nach Anspruch 18, **dadurch gekennzeichnet, dass** Fasern aus PA6 oder PA6.6 verwendet werden.

20. Verfahren nach Anspruch 18 oder 19, **dadurch gekennzeichnet, dass** Fasern mit einer Länge von 10 mm verwendet werden.

21. Verfahren nach einem der Ansprüche 18 bis 20, **dadurch gekennzeichnet, dass** Fasern mit einer Reißfestigkeit von wenigstens 250 N/mm² verwendet werden.

22. Verfahren nach einem der Ansprüche 18 bis 21, **dadurch gekennzeichnet, dass** farblose oder der Färbung des Gießformkörpers entsprechend gefärbte Fasern verwendet werden.

23. Verfahren nach einem der Ansprüche 18 bis 22, **dadurch gekennzeichnet, dass** die verwendeten Fasern oberflächlich zur Bildung reaktiver Gruppen plasmabehandelt sind, oder dass die Fasern mit einem Haftvermittler belegt sind.

24. Verfahren nach einem der Ansprüche 18 bis 23, **dadurch gekennzeichnet, dass** das verwendete Bindemittel ein Monomer, ein darin gelöstes Polymer und gegebenenfalls einen Vernetzer umfasst.

25. Verfahren nach Anspruch 24, **dadurch gekennzeichnet, dass** als Monomer Methylmethacrylat, als Polymer Polymethylmethacrylat und gegebenenfalls als Vernetzer Trimethylolpropantrimethacrylat verwendet wird.

## Claims

1. Cast-moulded article in a composite material comprising a cured polymeric binder incorporating embedded particles of filler, wherein the binder (6) incorporates randomly distributed fibres (8) of polyamide, wherein the fibres (8) have a main alignment essentially parallel to the face side (5) of the cast-moulded article (1), wherein an edge region (9) adjoining the face side of the cast-moulded article (1) is fibreless and it is only in the remaining volume of the article that the fibres (8) are present in the form of a dispersion, and wherein the fibres have a length of 8-12 mm and a diameter of 0.1-0.15 mm and the fibres (8) comprise 0.05-0.2 wt% based on the overall mass of the cast-moulded article (1).

2. Cast-moulded article according to Claim 1, **characterized in that** the fibres (8) are of nylon-6 or nylon-6,6.

3. Cast-moulded article according to Claim 1 or 2, **characterized in that** the fibres (8) have a length of 10 mm.

4. Cast-moulded article according to any preceding claim, **characterized in that** the fibres have a breaking strength of not less than 250 N/mm².

5. Cast-moulded article according to any preceding claim, **characterized in that** the fibres (8) are colourless or match the colour of the cast-moulded article.

6. Cast-moulded article according to any preceding claim, **characterized in that** the fibres (8) form a homogeneous distribution away from the edge region (9).

7. Cast-moulded article according to any preceding claim, **characterized in that** the fibres (8) attach to the binder (6) via superficial reactive groups.

8. Cast-moulded article according to any of Claims 1 to 6, **characterized in that** the fibres (8) have a coating of adhesion promoter attaching them to the binder (6).

9. Cast-moulded article according to any preceding claim, **characterized in that** the binder (6) comprises a monomer and a polymer dissolved in the monomer.

10. Cast-moulded article according to Claim 9, **characterized in that** the monomer is methyl methacrylate and the polymer is poly(methyl methacrylate).

11. Cast-moulded article according to any preceding claim, **characterized in that** the binder (6) comprises a crosslinker.

12. Cast-moulded article according to Claim 11, **characterized in that** the crosslinker is trimethylolpropane trimethacrylate.

13. Cast-moulded article according to any preceding claim, **characterized in that** the mass fraction of the filler particles (7) is between 40-85%, in particular between 60-80% and preferably between 65-75%, based on the mass of the cast-moulded article (1).

14. Cast-moulded article according to any preceding claim, **characterized in that** it contains inorganic types of filler particles (7), particularly of quartz sand, quartz meal, silicon dioxide, silicon carbide, glass, alumina or calcium carbonate.

15. Cast-moulded article according to any preceding claim, **characterized in that** the filler particles (7) are each between 0.01 mm and 2 mm in size.

16. Cast-moulded article according to Claim 15, **characterized in that** filler particles (7) in two or more different size fractions are present.

17. Cast-moulded article according to any preceding claim, **characterized in that** it is a sink, a wash-basin, a shower tray or a worktop.

18. Process for producing a cast-moulded article according to any preceding claim, wherein not only filler particles but also polyamide fibres having a length of 8-12 mm and a diameter of 0.1-0.15 mm are mixed into a curable polymeric solution of a binder to form a homogeneous casting composition, wherein the fibres comprise 0.05-0.2 wt% based on the overall mass of the casting composition, and then the casting composition is poured into a casting mould in such a way that the fibres (8) have a main alignment essentially parallel to the face side (5) of the cast-moulded article (1) and that an edge region (9) adjoining the face side of the cast-moulded article (1) is fibreless and it is only in the remaining volume of the article that the fibres (8) are present in the form of a dispersion, wherein the cast-moulded article is removed from the casting mould after the binder has cured.

19. Process according to Claim 18, **characterized in that** fibres of nylon-6 or nylon-6,6 are used.

20. Process according to Claim 18 or 19, **characterized in that** fibres having a length of 10 mm are used.

21. Process according to any of Claims 18 to 20, **characterized in that** fibres having a breaking strength of not less than 250 N/mm² are used.

22. Process according to any of Claims 18 to 21, **characterized in that** the fibres used are colourless or match the colour of the cast-moulded article.

23. Process according to any of Claims 18 to 22, **characterized in that** the fibres used have been plasma treated on the surface to form reactive groups or **in that** the fibres have a coating of adhesion promoter.

24. Process according to any of Claims 18 to 23, **characterized in that** the binder used comprises a monomer, a polymer dissolved in the monomer and optionally a crosslinker.

25. Process according to Claim 24, **characterized in that** the monomer used is methyl methacrylate, the polymer used is poly(methyl methacrylate) and optionally the crosslinker used is trimethylolpropane trimethacrylate.

## Revendications

1. Corps de moule de coulée en matériau composite comprenant un liant polymère durci et des particules de charge noyées dans celui-ci, des fibres (8) en polyamide, réparties aléatoirement dans le liant (6), étant introduites, les fibres (8) étant disposées avec une orientation de base sensiblement parallèle au côté visible (5) du corps de moule de coulée (1), une zone de bord (9) attenante au côté visible du corps de moule de coulée (1) étant dépourvue de fibres et les fibres (8) n'étant réparties que dans le volume restant du corps, et les fibres ayant une longueur de 8 à 12 mm et un diamètre de 0,1 à 0,15 mm et la proportion de fibres (8) étant de 0,05 à 0,2 % en poids sur la base de la masse totale du corps de moule de coulée (1).

2. Corps de moule de coulée selon la revendication 1, **caractérisé en ce que** les fibres (8) sont en PA6 ou PA6.6.

3. Corps de moule de coulée selon la revendication 1 ou 2, **caractérisé en ce que** les fibres (8) ont une longueur de 10 mm.

4. Corps de moule de coulée selon l'une des revendications précédentes, **caractérisé en ce que** les fibres ont une résistance à la déchirure d'au moins 250 N/mm².

5. Corps de moulée de coulée selon l'une des revendications précédentes, **caractérisé en ce que** les fibres (8) sont incolores ou colorées en correspondance de la couleur du corps de moule de coulée.

6. Corps de moule de coulée selon l'une des revendications précédentes, **caractérisé en ce que** les fibres (8) sont réparties de manière homogène à l'exception de la zone de bord (9).

7. Corps de moule de coulée selon l'une des revendications précédentes, **caractérisé en ce que** les fibres (8) sont liées au liant (6) par le biais de groupements réactifs superficiels.

8. Corps de moule de coulée selon l'une des revendications 1 à 6, **caractérisé en ce que** les fibres (8) sont enduites d'un promoteur d'adhérence par le biais duquel elles sont liées au liant (6).

9. Corps de moule de coulée selon l'une des revendications précédentes, **caractérisé en ce que** le liant (6) comprend un monomère et un polymère dissous dans celui-ci.

10. Corps de moule de coulée selon la revendication 9, **caractérisé en ce que** le monomère est le méthacrylate de méthyle et le polymère est le polyméthacrylate de méthyle.

11. Corps de moule de coulée selon l'une des revendications précédentes, **caractérisé en ce que** le liant (6) comprend un réticulant.

12. Corps de moule de coulée selon la revendication 11, **caractérisé en ce que** le réticulant est le triméthacrylate de triméthylolpropane.

13. Corps de moule de coulée selon l'une des revendications précédentes, **caractérisé en ce que** la proportion en masse des particules de charge (7) par rapport à la masse du corps de moule de coulée (1) est comprise entre 40 et 85 %, notamment entre 60 et 80 %, de préférence entre 65 et 75 %.

14. Corps de moule de coulée selon l'une des revendications précédentes, **caractérisé en ce qu'**il contient des particules de charge minérales (7), notamment en sable de quartz, poudre de quartz, dioxyde de silicium, carbure de silicium, verre, oxyde d'aluminium ou carbonate de calcium.

15. Corps de moule de coulée selon l'une des revendications précédentes, **caractérisé en ce que** les particules de charge (7) ont une granulométrie comprise entre 0,01 mm et 2 mm.

16. Corps de moule de coulée selon la revendication 15, **caractérisé en ce que** les particules de charge (7) sont présentes dans au moins deux proportions granulométriques différentes.

17. Corps de moule de coulée selon l'une des revendications précédentes, **caractérisé en ce qu'**il s'agit d'un évier, d'une vasque, d'un bac à douche ou d'un plan de travail.

18. Procédé de fabrication d'un corps de moule de coulée selon l'une des revendications précédentes, des particules de charge et des fibres en polyamide d'une longueur de 8 à 12 mm et d'un diamètre de 0,1 à 0,15 mm étant mélangées de manière homogène dans une solution de liant polymère durcissable pour former un composé de coulée, la proportion de fibres étant de 0,05 à 0,2 % en poids sur la base de la masse totale du composé de coulée, après quoi le composé de coulée étant versé dans un moule de coulée de telle sorte que les fibres (8) soient disposées avec une orientation de base sensiblement parallèle au côté visible (5) du corps de moule de coulée (1) et qu'une zone de bord (9) adjacente au côté visible du corps de moule de coulée (1) soit dépourvue de fibres et les fibres (8) soient uniquement réparties dans le volume restant du corps, le corps de moule de coulée étant retiré du moule de coulée après durcissement du liant.

19. Procédé selon la revendication 18, **caractérisé en ce qu'**on utilise des fibres en PA6 ou PA6.6.

20. Procédé selon la revendication 18 ou 19, **caractérisé en ce qu'**on utilise des fibres d'une longueur de 10 mm.

21. Procédé selon l'une des revendications 18 à 20, **caractérisé en ce qu'**on utilise des fibres ayant une résistance à la déchirure d'au moins 250 N/mm².

22. Procédé selon l'une des revendications 18 à 21, **caractérisé en ce qu'**on utilise des fibres incolores ou colorées en correspondance de la couleur du corps de moule de coulée.

23. Procédé selon l'une des revendications 18 à 22, **caractérisé en ce que** les fibres utilisées sont soumises à un traitement de surface par plasma pour former des groupements réactifs ou **en ce que** les fibres sont enduites d'un promoteur d'adhérence.

24. Procédé selon l'une des revendications 18 à 23, **caractérisé en ce que** le liant utilisé comprend un monomère, un polymère dissous à l'intérieur et éventuellement un réticulant.

25. Procédé selon la revendication 24, **caractérisé en ce qu'**on utilise le méthacrylate de méthyle comme monomère, le polyméthacrylate de méthyle comme polymère et, le cas échéant, le triméthacrylate de triméthylolpropane comme réticulant.
